# EUROPÄISCHE PATENTSCHRIFT

(11) **EP 2 872 428 B1**
(45) Veröffentlichungstag und Bekanntmachung des Hinweises auf die Patenterteilung: **16.11.2016**
(21) Anmeldenummer: 13735233.2
(22) Anmeldetag: 27.06.2013
(51) Int. Cl.: B65H 23/025, B65H 23/32

(54) **REVERSIERVORRICHTUNG FÜR EINE FOLIENBAHN MIT EINER BREITSTRECKWALZE**
REVERSING DEVICE FOR A FILM WEB BY MEANS OF AN EXPANDER ROLLER
DISPOSITIF RÉVERSIBLE POUR UNE BANDE DE FEUILLE POURVU D'UN ROULEAU ÉLARGISSEUR

(30) Priorität: 16.07.2012 DE 102012106389
(43) Veröffentlichungstag der Anmeldung: 20.05.2015
(73) Patentinhaber: Windmöller & Hölscher KG, 49525 Lengerich (DE)
(72) Erfinder: BUSSMANN, Markus, 45147 Essen (DE); HOFFMANN, Frank, 45721 Haltern am See (DE); KIRCHHOFF, Tim, 48157 Münster (DE)
(86) Internationale Anmeldenummer: PCT/EP2013/063570
(87) Internationale Veröffentlichungsnummer: WO 2014/012765

(56) Entgegenhaltungen:
- EP-A1- 0 749 823
- EP-A2- 1 533 100
- DE-A1-102006 012 355
- DE-C- 245 093
- US-A- 4 566 162

## Beschreibung

Die vorliegende Erfindung betrifft eine Reversiervorrichtung für eine Folienbahn, eine Flachlegevorrichtung für das Flachlegen einer Folienblase zu einer Folienbahn sowie eine Folienblasmaschine mit einer solchen Reversiervorrichtung.

Reversiervorrichtungen für Folienbahnen sind grundsätzlich wie aus dem Dokument EP 0 749 823 bekannt. Bekannte Reversiervorrichtungen sind zwischen einer Wickelvorrichtung und einer Flachlegevorrichtung einer Folienblasmaschine angeordnet. Für das Reversieren der Folienbahn wird eine Vielzahl unterschiedlicher Walzen verwendet, insbesondere eine Abzugsvorrichtung mit zumindest zwei Abzugswalzen, wenigstens eine Umlenkwalze und wenigstens eine Wendevorrichtung. Die Achsen der Wendevorrichtung, der Umlenkwalze und der Abzugsvorrichtung sind dabei winklig zueinander veränderbar. Mit anderen Worten kann im Einsatz einer solchen Reversiervorrichtung eine flachgelegte Folienbahn um eine Achse entlang der Mitte dieser Folienbahn in beide Richtungen gekippt werden. Da bei bekannten Folienblasmaschinen eine Wickelvorrichtung zum Aufwickeln der fertigen Folienbahn vorgesehen sein muss und diese Wickelvorrichtung häufig eine statische Achse aufweist, besteht je nach winkliger Anstellsituation der Umlenkwalzen, der Wendevorrichtungen und der Abzugsvorrichtung eine Winkeldifferenz zur Ausrichtung der Achse der Wickelvorrichtung. Dies führt dazu, dass bei einer Reversiervorrichtung bekannter Art ein langsames und stetiges Zurückführen auf eine Achsparallelität zur Achse der Wickelvorrichtung durchgeführt werden muss. Bei bekannten Reversiervorrichtungen wird hierfür üblicherweise ein unterschiedliches winkliges Anstellen mit unterschiedlichen Winkelgraden der einzelnen Umlenkwalzen, der einzelnen Wendevorrichtungen und der Abzugsvorrichtung durchgeführt. Damit wird über den Verlauf, ausgehend von der Abzugsvorrichtung über die Umlenkwalzen und die Wendevorrichtungen, die Folienbahn wieder senkrecht und damit parallel zur Wickelvorrichtung gestellt.

Nachteilhaft bei bekannten Reversiervorrichtungen ist es, dass durch das Reversieren die Gefahr von Faltenwurf besteht. Das Reversieren dient zwar grundsätzlich dazu mögliche Fehlstellen innerhalb der Folienbahn so zu verschieben, dass sie auf der Wickelvorrichtung sich nicht mehr gegenseitig addieren und dementsprechend keine sogenannten Kolbenringe als Verdickungen auf der Wickelvorrichtung erkennbar werden. Trotz des Vermeidens dieses Nachteils besteht jedoch in der Reversiervorrichtung die Gefahr, dass Falten in der Folienbahn auftreten oder dort verbleiben. Sollten solche Falten auf der Wickelvorrichtung aufgewickelt werden, führt dies zu zum Teil hohen mechanischen Belastungen bzw. zu Faltenfalzen, welche ein unschönes Erscheinungsbild der Folienbahn mit sich bringen. Eine so aufgewickelte Folienbahn ist dementsprechend von minderwertiger Qualität oder sogar Ausschuss.

Es ist Aufgabe der vorliegenden Erfindung, die voranstehend beschriebenen Nachteile zumindest teilweise zu beheben. Insbesondere ist es Aufgabe der vorliegenden Erfindung, eine Reversiervorrichtung für eine Folienbahn, eine Flachlegevorrichtung sowie eine Folienblasmaschine mit einer solchen Reversiervorrichtung zur Verfügung zu stellen, welche in kostengünstiger und einfacher Weise ein verbessertes Aufwickelverhalten, insbesondere unter Vermeiden oder Reduzieren von Ausschuss auf der Wickelvorrichtung, zur Verfügung stellen können.

Die voranstehende Aufgabe wird gelöst durch eine Reversiervorrichtung für eine Folienblasmaschine mit den Merkmalen des Anspruchs 1, eine Flachlegevorrichtung mit den Merkmalen des Anspruchs 13 sowie durch eine Folienblasmaschine mit den Merkmalen des Anspruchs 14. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Reversiervorrichtung beschrieben sind, selbstverständlich auch im Zusammenhang mit der erfindungsgemäßen Folienblasmaschine und jeweils umgekehrt, so dass bezüglich der Offenbarung zu den einzelnen Erfindungsaspekten stets wechselseitig Bezug genommen wird bzw. werden kann.

Eine erfindungsgemäße Reversiervorrichtung für eine Folienbahn weist eine Abzugsvorrichtung, wenigstens eine Wendevorrichtung und mindestens eine Umlenkwalze auf. Dabei ist die Folienbahn von der Abzugsvorrichtung über die wenigstens eine Wendevorrichtung und die mindestens eine Umlenkwalze zu einer Wickelvorrichtung führbar. Die Achsen der Abzugsvorrichtung, der wenigstens einen Wendevorrichtung und der mindestens einen Umlenkwalze sind zueinander winklig veränderbar. Eine erfindungsgemäße Reversiervorrichtung zeichnet sich dadurch aus, dass die zumindest eine Umlenkwalze als Breitstreckwalze mit zu den Stirnseiten der Umlenkwalze zunehmender Breitstreckfähigkeit ausgebildet ist.

Eine erfindungsgemäße Reversiervorrichtung für eine Folienbahn basiert auf bekannten Reversiervorrichtungen und dient dazu, Fehlstellen innerhalb der Folienbahn durch Reversieren zu verschieben. Das Reversieren durch das winklige Anstellen der einzelnen Achsen der Abzugsvorrichtung, der Wendevorrichtung und der Umlenkwalze zueinander führt dazu, dass Fehlstellen sich auf einer Wickelvorrichtung nicht aufaddieren und dementsprechend sogenannte Kolbenringe als addierte Fehlstellen auf der Wickelvorrichtung vermieden werden. Um nun zusätzlich in erfindungsgemäßer Weise die Entstehung von Falten bzw. das Bestehenbleiben von Falten innerhalb der Reversiervorrichtung zu vermeiden, ist zumindest eine der mindestens einen Umlenkwalzen als Breitstreckwalze ausgebildet. Eine solche Breitstreckwalze weist insbesondere Breitstreckelemente auf, welche in der Lage sind, Falten aus der Folienbahn während der Förderung herauszustreichen. Solche Breitstreckelemente können z. B. lamellenartige Strukturen oder Borsten sein. Aufgrund der Tatsache, dass bei einer erfindungsgemäßen Reversiervorrichtung eine kontinuierliche bzw. semikontinuierliche Veränderung der winkligen Anstellung der Achsen der Abzugsvorrichtung, der wenigstens einen Wendevorrichtung und der mindestens einen Umlenkwalze zueinander stattfindet, besteht auch ständig eine unterschiedliche Einlaufsituation auf die Wendevorrichtung und mindestens auf die Umlenkwalze. Bei Breitstreckwalzen hängt der Grad der Breitstreckfähigkeit von der zugehörigen Einlauflänge ab. Da über die mindestens eine Umlenkwalze und die wenigstens eine Wendevorrichtung die Folienbahn wieder in die senkrechte Position und damit achsparallel zur Achse der Wickelvorrichtung zurückgeführt wird, bestehen Winkel zwischen den Achsen der Wendevorrichtung und der Umlenkwalze, welche nicht rechtwinklig sind bzw. nicht 180° betragen. Insbesondere stehen diese Achsen im Verlauf der Reversierbewegung nicht bzw. nur ein einziges Mal beim Durchlauf der Mittelposition senkrecht zueinander. Dies führt dazu, dass die winklig zueinander ausgerichteten Achsen unterschiedlich lange Einlauflängen auf den beiden Seitenfalzen der Folienbahn aufweisen. Aufgrund der Tatsache, dass die Breitstreckfähigkeit einer Breitstreckwalze von der Einlauflänge abhängt, variiert demnach auch die Breitstreckfähigkeit in Abhängigkeit der winkligen Anstellposition der Achsen der Wendevorrichtung und der Umlenkwalze zueinander. Unter der Einlauflänge ist dabei vorzugsweise der freie Abstand zwischen zwei Rollen, also die ungeführte Strecke der Folienbahn zwischen zwei Rollen, Zylindern oder Walzen, zu verstehen.

Aufgrund der Tatsache, dass hier unterschiedliche Einlauflängen zu unterschiedlicher Breitstreckfähigkeit führen, kann grundsätzlich bei bekannten Reversiervorrichtungen eine effiziente Faltenbeseitigung nicht in dem gesamten Reversierwinkelbereich der Reversiervorrichtung stattfinden. So kann es vorkommen, dass die Reversiervorrichtung in ihren Extrempositionen nicht mehr ausreichend Breitstreckfähigkeit zur Verfügung stellt, um die Falten nach außen auszustreichen. Erfindungsgemäß ist die Breitstreckwalze daher mit zu den Stirnseiten der Umlenkwalze zunehmender Breitstreckfähigkeit ausgebildet.

Unter Breitstreckfähigkeit ist dabei der Grad zu verstehen, mit welchem Falten aus der Folienbahn heraustransportiert werden können. Die Breitstreckfähigkeit kann auch als Transportfähigkeit bzw. Faltentransportfähigkeit bezeichnet werden. Unter Breitstreckfähigkeit ist vorzugsweise zu verstehen, dass über die Breite der Umlenkwalze die Folienbahn geglättet wird. Durch Zugkraft auf die Folienbahn zu den Stirnseiten der Umlenkwalze hin werden die Falten ausgeglättet bzw. ausgezogen. Die Breitstreckfähigkeit wird z. B. durch geometrische Parameter einzelner Breitstreckelemente definiert. So können z. B. Lamellen, Borsten oder borstenähnliche Strukturen eine winklige Anstellung aufweisen, welche hinsichtlich des Anstellwinkels von der Mitte der Umlenkwalze zu den Stirnseiten hin zunimmt. Die Breitstreckfähigkeit kann auch als eine Zunahme der Breitstreckkraft von innen nach außen zu den Stirnseiten der Umlenkwalze hin verstanden werden.

Eine erfindungsgemäße Reversiervorrichtung bezieht sich insbesondere auf eine Folienbahn, welche von einer Folienblasmaschine hergestellt worden ist. Sie wird nach dem Flachlegen der hergestellten Folienblase angeordnet, um die als Folienbahn flachgelegte Folienblase zu reversieren. Nachfolgend der erfindungsgemäßen Reversiervorrichtung erfolgt der Transport zur Wickelvorrichtung, welcher ein separater Bestandteil der Folienblasmaschine und nicht mehr der Reversiervorrichtung ist.

Die Abzugsvorrichtung ist in erfindungsgemäßer Weise insbesondere eine Kombination aus wenigstens zwei Abzugsrollen. Diese sind so zueinander angeordnet, dass die Folienbahn zwischen diesen beiden Abzugswalzen hindurchläuft. Vorzugsweise ist der Abstand zwischen diesen beiden Abzugswalzen einstellbar bzw. variierbar, so dass sie gleichzeitig ein Abquetschen durchführen können, um Luftblasen innerhalb der Folienbahn nach dem Flachlegen zu vermeiden. Gleichzeitig können die Abzugswalzen aktiv angetrieben sein, so dass eine aktive Förderung bzw. ein aktiver Transport der Folienbahn durch die Abzugsvorrichtung möglich ist. Auch die Umlenkwalzen können angetrieben sein oder einfach rotierbar gelagert sein.

Durch eine Breitstreckwalze mit insbesondere auf der Umfangsfläche angeordneten Breitstreckelementen mit zu den Stirnseiten der Umlenkwalze zunehmender Breitstreckfähigkeit wird somit eine Kombination von zwei Fehlerbehebungen zur Verfügung gestellt. Zum einen wird durch das Reversieren ein Verschieben von möglichen Fehlstellen der Folienbahn erreicht, so dass sogenannte Kolbenringe als addierte Fehlstellen auf der Wickelvorrichtung wirksam vermieden werden. Durch die entsprechende und erfindungsgemäße Ausbildung der mindestens einen Umlenkwalze wird darüber hinaus bereits bestehender Faltenwurf oder während der Reversierung durch das Anstellen der Umlenkwalze zu der Wendevorrichtung und zu der Abzugsvorrichtung entstehender Faltenwurf vermieden bzw. ausgeglichen und heraus geglättet.

Eine erfindungsgemäße Reversiervorrichtung kann dahin gehend weitergebildet sein, dass die Umlenkwalze auf der Umfangsfläche zumindest abschnittsweise Breitstreckelemente aufweist, welche einen Anstellwinkel aufweisen, der in Richtung der Stirnseiten der Umlenkwalze zunimmt. Breitstreckelemente sind insbesondere Elemente, die sich radial oder im Wesentlichen radial von der Umfangsfläche weg erstrecken. Die Anstellwinkel sind dabei vorzugsweise auf die radiale Richtung zur Achse der Umlenkwalze bezogen. Ein Breitstreckelement, welches z. B. borstenartig ausgebildet ist und sich radial erstreckt, weist somit einen Anstellwinkel von 0° auf. Ein Anstellen von dieser radialen Richtung weg führt zu einem zunehmenden Anstellwinkel. Je stärker der Anstellwinkel eines solchen Breitstreckelements ausgebildet ist, umso größer ist die Kraft, welche es auf die geförderte Folienbahn ausüben kann. Durch die Vergrößerung der ausgeübten Kraft wird dementsprechend auch die zugehörige Breitstreckfähigkeit vergrößert, so dass die voranstehend beschriebene Ausführungsform eine Möglichkeit ist, die erfindungsgemäße Zunahme der Breitstreckfähigkeit zu den Stirnseiten der Umlenkwalze hin auszubilden.

Es kann von Vorteil sein, wenn bei einer erfindungsgemäßen Reversiervorrichtung der Anstellwinkel von der Mitte der Umlenkwalze zu den Stirnseiten der Umlenkwalze von 0° bis ca. 45°, insbesondere bis ca. 30° zunimmt. Die Mitte der Umlenkwalze ist dabei nicht zwangsläufig die geometrische Mitte der Umlenkwalze, sondern vielmehr bezogen auf die Mittellage bzw. die Mittelbahn bzw. die Mittelachse der Folienbahn, welche um die Umlenkwalze gefördert wird. Diese Mitte ist gleichzeitig vorzugsweise genau oder im Wesentlichen genau die Rotationsachse, um welche die Umlenkwalze bei der winkligen Anstellung relativ zu den Achsen der Wendevorrichtung und der Abzugsvorrichtung angestellt bzw. gekippt wird. Die Reduktion des Anstellwinkels auf Werte von kleiner als ca. 45° bzw. kleiner als ca. 30° führt dazu, dass die Maximalkraft erreicht und nicht wieder unterschritten wird. Ein weiteres Anstellen in Richtung einer Parallelität der Breitstreckelemente zur Achse der Umlenkwalze, also insbesondere für Anstellwinkel im Bereich zwischen ca. 45° und 90°, würde möglicherweise zu einer Reduktion der Breitstreckkraft und damit zu einer unerwünschten und nicht erfindungsgemäßen Reduktion der Breitstreckfähigkeit zu den Stirnseiten der Umlenkwalze hin führen.

Vorteilhaft ist es darüber hinaus, wenn bei einer erfindungsgemäßen Reversiervorrichtung die Breitstreckelemente zumindest abschnittsweise als Borsten ausgebildet sind. Diese können z. B. Kunststoffborsten sein. So können einzelne Borsten bzw. Borstenbüschel erfindungsgemäß angeordnet sein, um die Breitstreckfähigkeit in zunehmender Weise in Richtung der Stirnseiten der Umlenkwalze auszubilden. Die Ausbildung in Form von Borsten für die Breitstreckelemente ist insbesondere hinsichtlich des Materialaufwandes und des Fertigungsaufwandes besonders kostengünstig.

Vorteilhaft ist es darüber hinaus, wenn bei einer erfindungsgemäßen Reversiervorrichtung die Breitstreckfähigkeit der Umlenkwalze zu den Stirnseiten hin linear oder im Wesentlichen linear zunimmt. Wird die Breitstreckfähigkeit z. B. durch zunehmenden Anstellwinkel erzielt, so wird dieser Anstellwinkel vorzugsweise linear verändert, insbesondere linear zu den Stirnseiten der Umlenkwalze hin vergrößert. Aufgrund der Tatsache, dass die Breitstreckwalze zu beiden Stirnseiten der Umlenkwalze hin zunimmt, werden die beiden maximalen Breitstreckfähigkeiten jeweils an den beiden Stirnseiten erreicht. Dies erfolgt vorzugsweise in symmetrischer Konstruktionsweise, so dass bei einem Reversieren in beiden Richtungen, also bei einem Anstellen der Achsen der Abzugsvorrichtung einmal um bis zu +180° und einmal bis zu -180°, eine im Wesentlichen symmetrische Wirkung der als Breitstreckwalze ausgeführten Umlenkwalze erzielbar wird. Durch die lineare Ausführungsform der Breitstreckfähigkeiten wird vorzugsweise eine kontinuierliche Kompensation der unterschiedlichen Einlauflängen möglich. Darüber hinaus wird die Fertigung vereinfacht. Das im Wesentlichen lineare Ausführen kann z. B. durch stufenweises oder kontinuierliches Vergrößern des Anstellwinkels zur Verfügung gestellt werden.

Vorteilhaft ist es ebenfalls, wenn bei einer erfindungsgemäßen Reversiervorrichtung die Breitstreckfähigkeit der Umlenkwalze zu beiden Stirnseiten der Umlenkwalze symmetrisch oder im Wesentlichen symmetrisch zur Mitte der Umlenkwalze zunimmt. Auch hier ist die Mitte der Umlenkwalze wieder bezogen auf die Mittellage, die Mittelbahn bzw. die Mittelachse der Folienbahn. Das symmetrische oder im Wesentlichen symmetrische Zunehmen der Breitstreckfähigkeit führt zu einer symmetrischen bzw. im Wesentlichen symmetrischen Breitstreckfähigkeit in beiden Reversierrichtungen, also in Richtung von +180°, wie auch in Richtung von -180° Reversierwinkel. Damit wird eine im Wesentlichen gleichmäßige Leistung der Reversierung, wie auch des Faltenausgleichs über den gesamten Reversierbereich erzielt.

Vorteilhaft ist es darüber hinaus, wenn bei einer erfindungsgemäßen Reversiervorrichtung die wenigstens eine Wendevorrichtung zylindrisch, insbesondere als Luftwendestange, ausgebildet ist. Dies führt zu besonders kostengünstiger und einfacher Konstruktionsweise, da insbesondere keine rotatorische Lagerung einer solchen Wendevorrichtung notwendig ist. Ist diese Wendevorrichtung als Luftwendestange ausgebildet, so kann über Öffnungen in der Wendevorrichtung ein Luftpolster zwischen der Luftwendestange einerseits und der geförderten Folienbahn andererseits zur Verfügung gestellt werden. Dies ermöglicht einen besonders schnellen und reibungsarmen Transport, wobei gleichzeitig die Wendevorrichtung statisch gelagert sein kann, und ausschließlich für die winklige Veränderung ihrer Achse ausgebildet sein muss.

Erfindungsgemäß ist es weiter von Vorteil, wenn bei einer Reversiervorrichtung ausgehend von der Abzugswalze entlang des Verlaufs der Folienbahn eine erste Umlenkwalze, eine erste Wendevorrichtung, eine zweite Umlenkwalze, eine zweite Wendevorrichtung und eine dritte Umlenkwalze angeordnet sind. Dabei ist zumindest eine Umlenkwalze, insbesondere wenigstens die zweite Umlenkwalze, als Breitstreckwalze mit zu den Stirnseiten der Umlenkwalze zunehmender Breitstreckfähigkeit ausgebildet. Die Erhöhung der Anzahl der Umlenkwalzen und der Wendevorrichtungen auf die bei dieser Ausführungsform beschriebene Anzahl führt dazu, dass geringere Winkelschritte zwischen den einzelnen Walzen bzw. den einzelnen Wendevorrichtungen vorliegen müssen, um die Folienbahn wieder in ihre senkrechte und damit zur Wickelvorrichtung achsparallele Ausrichtung zurückzuführen. Dies reduziert die Spannungen in der Folienbahn und stellt gleichzeitig die erfindungsgemäßen Vorteile, wie beschrieben, zur Verfügung. Gleichzeitig stellt diese Ausführungsform eine Variante dar, welche auf unnötige hohe Anzahlen von Umlenkwalzen und Wendevorrichtungen verzichtet. So kann diese Ausführungsform vorzugsweise auch als ideale Anzahl, also als Kompromiss zwischen guter Rückführfähigkeit und geringem Konstruktionsaufwand gesehen werden.

Erfindungsgemäß ist es ebenfalls sinnvoll, wenn bei der Reversiervorrichtung die erste Umlenkwalze und die Abzugsvorrichtung zueinander parallel oder im Wesentlichen parallel ausgerichtete Achsen aufweisen. Der Einlauf von der Abzugsvorrichtung erfolgt also ohne ein Zurückführen der Folienbahn. So kann eine definierte Rotationsrückführung erst ab der ersten Umlenkwalze bis zur dritten Umlenkwalze zurück zur Verfügung gestellt werden. Die Folienbahn verläuft zwischen der Abzugsvorrichtung zu der ersten Umlenkwalze somit noch parallel zu den Achsen der Abzugsvorrichtung und der ersten Umlenkwalze. Es findet also gemeinsam mit der Abzugsvorrichtung ein gleichzeitiges Verkippen um den gleichen Parameterwert auch für die Umlenkwalze, also ebenfalls um den Reversierwinkel, statt.

Die erfindungsgemäße Reversiervorrichtung kann auch dahin gehend weitergebildet sein, dass die Achse der dritten Umlenkwalze parallel oder im Wesentlichen parallel zu der Achse der Wickelvorrichtung anordenbar ist. Damit kann die dritte Umlenkwalze vorzugsweise statisch, also nicht verkippbar, ausgebildet sein. Auf diese Weise kann die Folienbahn in definierter und unveränderlicher Weise am Ende der Reversiervorrichtung wieder für den Weitertransport zur Wickelvorrichtung zur Verfügung gestellt sein. Der Ausgleich des Reversierwinkels erfolgt demnach vorzugsweise durch eine Kombination technischer Lösungen dieses und des voranstehenden Absatzes, so dass die erste Umlenkwalze für den Start der Rückführung zur Verfügung steht, während die dritte Umlenkwalze bereits eine Ausrichtung für vollständig zurückgeführte, also senkrecht stehende Folienbahnen darstellt.

Eine erfindungsgemäße Reversiervorrichtung ist vorzugsweise derart ausgebildet, dass die Rotation der ersten Wendevorrichtung ¾ der Rotation der Abzugsvorrichtung entspricht und/oder die Rotation der zweiten Umlenkwalze ½ der Rotation der Abzugsvorrichtung entspricht und/oder die Rotation der zweiten Wendevorrichtung ¼ der Rotation der Abzugsvorrichtung entspricht. Während des Reversiervorgangs findet also vorzugsweise eine Art Auffächern der einzelnen Achsen der Wendevorrichtungen und der Umlenkwalzen zueinander statt. Somit wird der Winkelunterschied der Achsen zwischen den einzelnen Umlenkwalzen und den einzelnen Wendevorrichtungen reduziert bzw. im Wesentlichen gleichmäßig verteilt, so dass die entsprechende Zugspannung auf der Folienbahn während der Reversierung bzw. während der Rückführung auf ein Minimum reduziert wird.

Erfindungsgemäß ist es ebenfalls von Vorteil, wenn bei der Reversiervorrichtung wenigstens eine Kühlwalze, vorzugsweise mit Bezug auf den Verlauf der Folienbahn zwischen der Abzugsvorrichtung und der mindestens einen Umlenkwalze, angeordnet ist. Diese Kühlwalze führt dazu, dass ein zusätzliches Abkühlen der Folienbahn möglich wird. Es ist also vorzugsweise eine exakte Temperaturregelung möglich, so dass vermieden wird, dass die erhöhte Beanspruchung in der Reversiervorrichtung ein unerwünschtes Verstrecken der Folienbahn zur Folge hätte.

Ebenfalls Gegenstand der vorliegenden Erfindung ist eine Flachlegevorrichtung für das Flachlegen einer Folienblase zu einer Folienbahn mit einer Reversiervorrichtung für das Reversieren der Folienbahn, wobei die Reversiervorrichtung in erfindungsgemäßer Weise ausgebildet ist. Dementsprechend ergeben sich für die Flachlegevorrichtung die gleichen Vorteile, wie sie ausführlich mit Bezug auf die erfindungsgemäße Reversiervorrichtung erläutert worden sind.

Ebenfalls Gegenstand der vorliegenden Erfindung ist eine Folienblasmaschine mit mindestens einem Folienextruder für das Herstellen einer Folienblase, einer Flachlegevorrichtung für das Flachlegen der Folienblase zu einer Folienbahn, einer Reversiervorrichtung für das Reversieren der Folienbahn und einer Wickelvorrichtung zum Aufwickeln der Folienbahn. Eine Folienblasmaschine nach der vorliegenden Erfindung zeichnet sich dadurch aus, dass die Reversiervorrichtung in erfindungsgemäßer Weise ausgebildet ist. Dementsprechend bringt eine erfindungsgemäße Folienblasmaschine die gleichen Vorteile mit sich, wie sie ausführlich mit Bezug auf eine erfindungsgemäße Reversiervorrichtung erläutert worden sind.

Die vorliegende Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen schematisch:
- Fig. 1: eine Ausführungsform einer erfindungsgemäßen Reversiervorrichtung,
- Fig. 2a: eine Ausführungsform einer erfindungsgemäßen Reversiervorrichtung in einer Frontansicht,
- Fig.2b: die Ausführungsform der Fig. 2 mit um 90° nach rechts reversierter Abzugsvorrichtung,
- Fig.2c: die Ausführungsform der Fig. 2a und 2b mit um 90° nach links reversierter Abzugsvorrichtung,
- Fig. 3: eine schematische Darstellung der Einlauflängensituation einer Umlenkwalze,
- Fig. 4: die schematische Darstellung von angestellten Breitstreckelementen,
- Fig. 5: eine schematische Darstellung einer Ausführungsform einer erfindungsgemäßen Folienblasmaschine und
- Fig. 6: eine schematische Darstellung einer linearen bzw. im Wesentlichen linearen Veränderung der Transportfähigkeit.

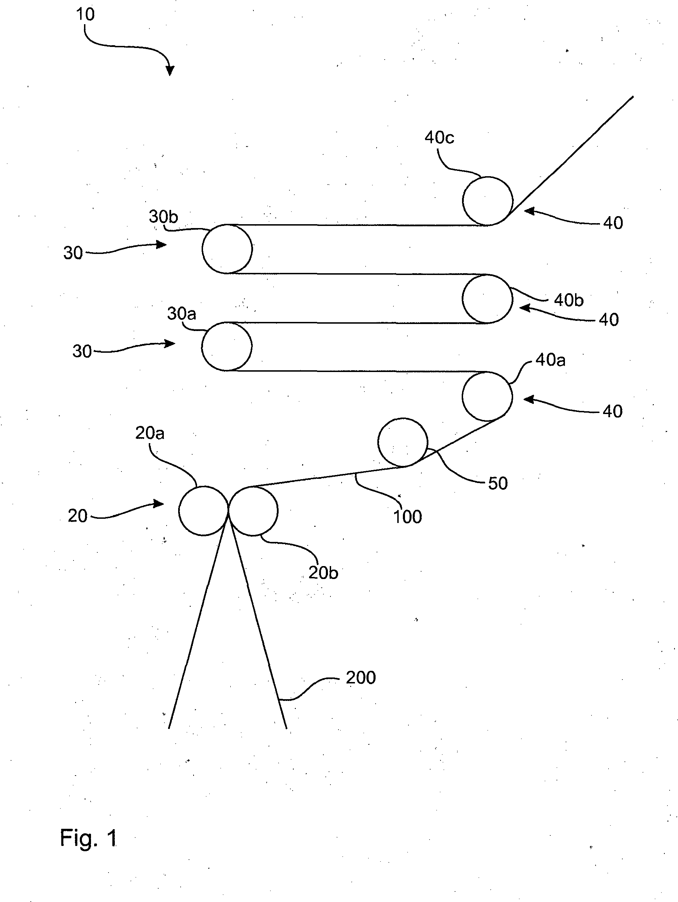

In Fig. 1 ist eine erste Ausführungsform einer erfindungsgemäßen Reversiervorrichtung 10 dargestellt. Diese Reversiervorrichtung weist eine Abzugsvorrichtung 20 mit zwei Abzugswalzen 20a und 20b auf zu welcher eine Folienblase 200 in flachgelegter Weise zugeführt wird. Spätestens ab der Abzugsvorrichtung 20 ist die Folienblase 200 vollständig flachgelegt und nunmehr als doppelte Folienbahn 100 ausgebildet. Diese Folienbahn, 100 wird über eine Kühlwalze 50 zur exakten Temperaturregelung der Folienbahn 100 geführt. Anschließend erreicht die Folienbahn 100 eine erste Umlenkwalze 40, 40a, welche ein Umlenken der Folienbahn 100 in Richtung einer ersten Wendevorrichtung 30, 30a durchführt. Diese führt die Folienbahn 100 wiederum zu einer zweiten Umlenkwalze 40, 40b, welche wiederum die Folienbahn 100 zu einer zweiten Wendevorrichtung 30, 30b führt. Abschließend wird die Folienbahn 100 zu einer dritten Umlenkwalze 40, 40c geführt, von welcher aus die Folienbahn 100 die Reversiervorrichtung 10 verlässt.

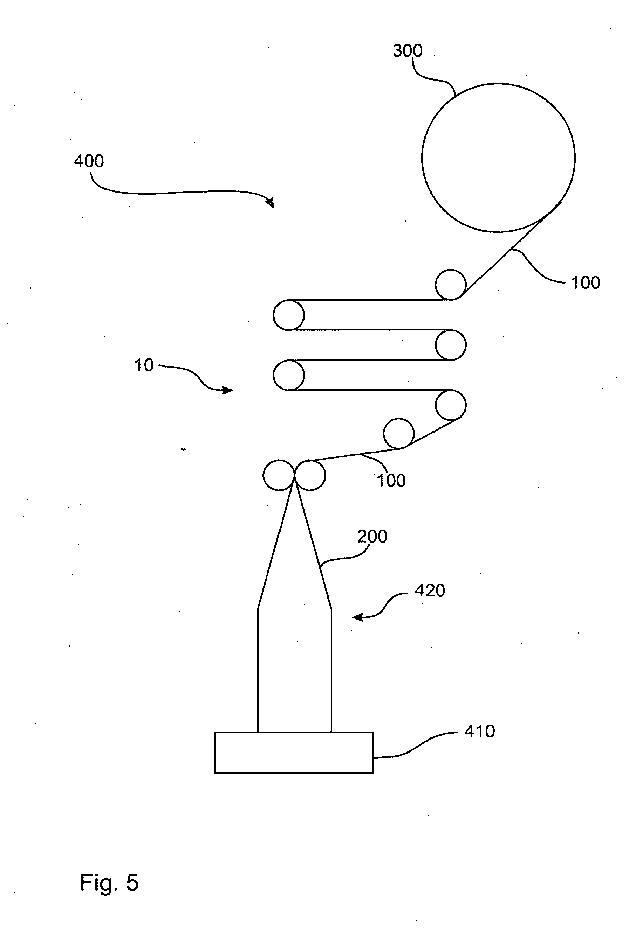

Die Ausführungsform, wie sie Fig. 1 zeigt, ist insbesondere in einer Folienblasmaschine 400 eingesetzt, wie sie die Fig. 5 zeigt. So wird anschließend die Folienbahn 100 zu einer Wickelvorrichtung 300 geführt, welche ein Aufwickeln der Folienbahn 100 durchführt. Am anderen Eingangsende der Reversiervorrichtung 10 ist ein Folienextruder 410 vorgesehen, welcher extrudierend die Folienblase 200 herstellt. Die fertiggestellte Folienblase 200 wird mithilfe einer Flachlegevorrichtung 420 zur Folienbahn 100 flachgelegt.

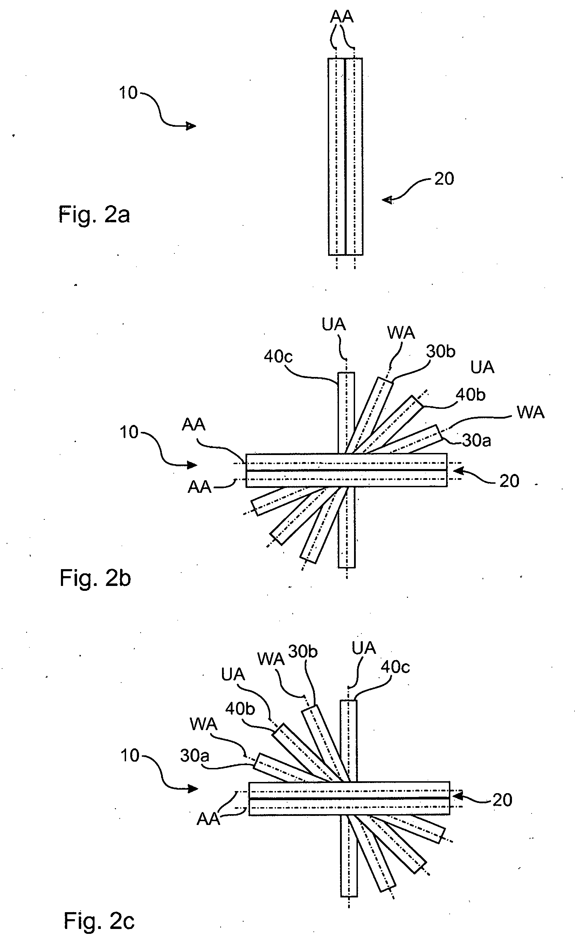

Um während der Herstellung der Folienblase 200 entstehende Fehlstellen mit unterschiedlichen Dicken des Materials der Folienblase hinsichtlich einer Addition auf der Wickelfolie 300 zu vermeiden, ist die Reversiervorrichtung 10 vorgesehen. Nach dem Flachlegen der Folienbahn 100 erfolgt der Reversiervorgang, wie er nachfolgend schematisch mit Bezug auf die Fig. 2a bis 2c erläutert wird.

Fig. 2a zeigt die Grundposition der Abzugsvorrichtung 20, wobei die weiteren Umlenkwalzen 40 und Wendevorrichtungen 30 der Abzugsvorrichtung 20 nachgeordnet angeordnet sind. Dementsprechend sind diese nicht bzw. kaum zu erkennen in der Situation, wie sie die Fig. 2a zeigt. Erfolgt nun der Start des Reversiervorgangs, so wird die Abzugsvorrichtung 20 um ihre Mitte rotiert. Fig. 2b zeigt die Situation, bei welcher die Abzugsvorrichtung 20 um 90° nach rechts rotiert ist. Nun fächern die weiteren Umlenkwalzen 40 und Wendevorrichtungen 30 auf, so dass sie auch in der Fig. 2b erkennbar werden. Die einzelnen Achsen AA, WA, UA sind dabei zueinander winklig angestellt. Die Umlenkwalzen 40 und die Wendevorrichtungen 30 führen die reversierte Folienbahn 100, welche in den Fig. 2a bis 2c aus Übersichtlichkeitsgründen nicht dargestellt ist, wieder in eine senkrechte Position zurück, in welcher die Folienbahn parallel bzw. im Wesentlichen parallel zur Rotationsachse der Wickelvorrichtungen 300 liegt. Der Winkelunterschied zwischen den einzelnen Achsen AA, WA, UA ist dabei im Wesentlichen gleich zueinander, um unnötige Spannungen in der Folienbahn 100 zu vermeiden. Die letzte und dritte Umlenkwalze 40c steht bereits wieder senkrecht. Fig. 2c zeigt die Reversionssituation mit einer Abzugsvorrichtung 20, welche um 90° nach links reversiert ist. Dies können bereits Endpositionen der Abzugsvorrichtung 20 sein. Selbstverständlich ist es jedoch auch möglich, dass die Abzugsvorrichtung 20 einen größeren Reversierwinkel aufweisen kann. So sind z. B. Reversierwinkel von bis zu ± 180° oder sogar noch mehr im Rahmen der vorliegenden Erfindung denkbar.

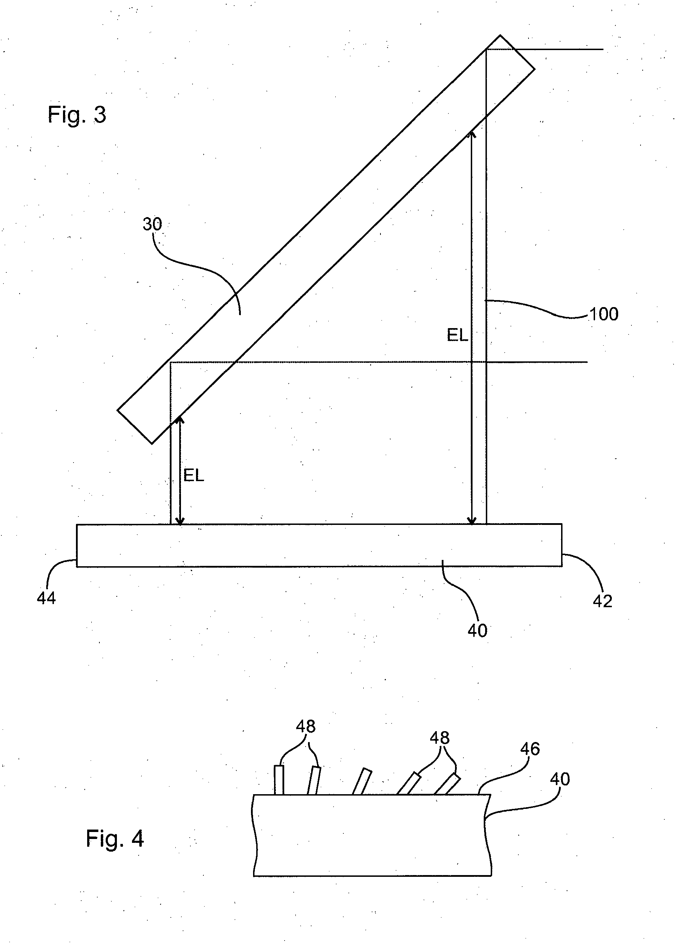

Die Fig. 3 zeigt, dass in der Fächersituation, wie sie in den Fig. 2b und 2c beispielhaft dargestellt ist, unterschiedliche Einlauflängen EL, z. B. auf eine Umlenkwalze 40 von einer Wendevorrichtung 30, für die Folienbahn 100 vorherrschen. Die Einlauflängen EL beziehen sich dabei auf den freien Abstand in der Transportrichtung zwischen der Umlenkwalze 40 und der Wendevorrichtung 30. Da die Breitstreckfähigkeit einer als Breitstreckwalze ausgebildeten Umlenkwalze 40 von der Einlauflänge EL abhängt, sind bei der vorliegenden Erfindung zumindest die zweite Umlenkwalze 40b, vorzugsweise auch weitere Umlenkwalzen 40, mit einer zunehmenden Breitstreckfähigkeit in Richtung der Stirnseiten 42 und 44 ausgestattet. Diese Zunahme an Breitstreckfähigkeit kann z. B. durch eine Zunahme des Anstellwinkels von Breitstreckelementen 48 erfolgen, wie es die Fig. 4 schematisch zeigt. Diese Breitstreckelemente 48 können lamellenartige Strukturen oder z. B. Borsten sein, welche auf der Umfangsfläche 46 der zugehörigen Umlenkwalze 40 angeordnet sind. Auf diese Weise wird eine Erhöhung der Breitstreckkraft in Richtung der Stirnseiten 42 und 44 erzielt, so dass auch in stark reversierender Ausrichtung der Reversiervorrichtung 10 eine Kompensation der dann stark unterschiedlichen Einlauflängen, EL durch die am Rand verstärkte Breitstreckfähigkeit stattfinden kann.

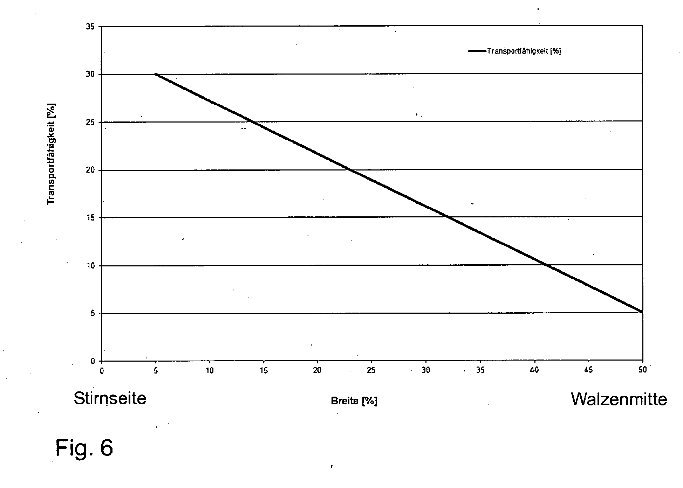

Eine lineare, vorzugsweise im Wesentlichen lineare Ausführung der Verstärkung bzw. Zunahme der Breitstreckfähigkeit bzw. der Transportfähigkeit in % ist in der Grafik der Fig. 6 dargestellt. Dort ist in axialer Richtung, also auf die Stirnseiten 42 und 44 der Umlenkwalze 40 zu, eine Zunahme der Breitstreckfähigkeit/Transportfähigkeit, zum Beispiel durch eine entsprechende Veränderung des Änstellwinkels, zu erkennen. Dabei kann auch ein schrittweises, also stufenweises Zunehmen der Breitstreckfähigkeit/Transportfähigkeit durch Veränderung der Anstellwinkel zur Verfügung gestellt werden.

### Bezugszeichenliste

- 10: Reversiervorrichtung
- 20: Abzugsvorrichtung
- 20a: Abzugswalze
- 20b: Abzugswalze
- 30: Wendevorrichtung
- 30a: erste Wendevorrichtung
- 30b: zweite Wendevorrichtung
- 40: Umlenkwalze
- 40a: erste Umlenkwalze
- 40b: zweite Umlenkwalze
- 40c: dritte Umlenkwalze
- 42: Stirnseite der Umlenkwalze
- 44: Stirnseite der Umlenkwalze
- 46: Umfangsfläche
- 48: Breitstreckelement
- 50: Kühlwalze

- 100: Folienbahn
- 200: Folienblase
- 300: Wickelvorrichtung
- 400: Folienblasmaschine
- 410: Folienextruder
- 420: Flachlegevorrichtung

- AA: Achse der Abzugsvorrichtung
- WA: Achse der Wendevorrichtung
- UA: Achse der Umlenkwalze
- EL: Einlauflänge

## Patentansprüche

1. Reversiervorrichtung (10) für eine Folienbahn (100), aufweisend eine Abzugsvorrichtung (20), wenigstens eine Wendevorrichtung (30) und mindestens eine Umlenkwalze (40), wobei die Folienbahn (100) von der Abzugsvorrichtung (20) über die wenigstens eine Wendevorrichtung (30) und die mindestens eine Umlenkwalze (40) zu einer Wickelvorrichtung (300) führbar ist und die Achsen (AA, WA, UA) der Abzugsvorrichtung (20), der wenigstens einen Wendevorrichtung (30) und der mindestens einen Umlenkwalze (40) zueinander winklig veränderbar sind, **dadurch gekennzeichnet, dass** die mindestens eine Umlenkwalze (40) als Breitstreckwalze mit zu den Stirnseiten (42, 44) der Umlenkwalze (40) zunehmender Breitstreckfähigkeit ausgebildet ist,
wobei die Umlenkwalze (40) auf der Umfangsfläche (46) zumindest abschnittsweise Breitstreckelemente (48) aufweist, welche einen Anstellwinkel aufweisen, der in Richtung der Stirnseiten (42, 44) der Umlenkwalze (40) zunimmt.

2. Reversiervorrichtung (10) nach Anspruch 1, **dadurch gekennzeichnet, dass** der Anstellwinkel von der Mitte der Umlenkwalze (40) zu den Stirnseiten (42, 44) der Umlenkwalze (40) von 0° bis ca. 45° zunimmt.

3. Reversiervorrichtung (10) nach einem der Ansprüche 1 oder 2, **dadurch gekennzeichnet, dass** die Breitstreckelemente (48) zumindest abschnittsweise als Borsten ausgebildet sind.

4. Reversiervorrichtung (10) nach einem der vorangegangenen Ansprüche, **dadurch gekennzeichnet, dass** die Breitstreckfähigkeit der Umlenkwalze (40) zu den Stirnseiten (42, 44) hin linear oder im Wesentlichen linear zunimmt.

5. Reversiervorrichtung (10) nach einem der vorangegangenen Ansprüche, **dadurch gekennzeichnet, dass** die Breitstreckfähigkeit der Umlenkwalze (40) zu beiden Stirnseiten (42, 44) der Umlenkwalze (40) symmetrisch oder im Wesentlichen symmetrisch zur Mitte der Umlenkwalze (40) zunimmt.

6. Reversiervorrichtung (10) nach einem der vorangegangenen Ansprüche, **dadurch gekennzeichnet, dass** die wenigstens eine Wendevorrichtung (30) zylindrisch, insbesondere als Luftwendestange, ausgebildet ist.

7. Reversiervorrichtung (10) nach einem der vorangegangenen Ansprüche, **dadurch gekennzeichnet, dass** ausgehend von der Abzugsvorrichtung (20) entlang des Verlaufs der Folienbahn (100) eine erste Umlenkwalze (40a), eine erste Wendevorrichtung (30a), eine zweite Umlenkwalze (40b), eine zweite Wendevorrichtung (30b) und eine dritte Umlenkwalze (40c) angeordnet sind, wobei zumindest eine Umlenkwalze (40), insbesondere wenigstens die zweite Umlenkwalze (40b), als Breitstreckwalze mit zu den Stirnseiten (42, 44) der Umlenkwalze (40) zunehmender Breitstreckfähigkeit ausgebildet ist.

8. Reversiervorrichtung (10) nach Anspruch 7, **dadurch gekennzeichnet, dass** die erste Umlenkwalze (40a) und die Abzugsvorrichtung (20) zueinander parallel oder im Wesentlichen parallel ausgerichtete Achsen (UA, AA) aufweisen.

9. Reversiervorrichtung (10) nach einem der Ansprüche 7 oder 8, **dadurch gekennzeichnet, dass** die Achse (UA) der dritten Umlenkwalze (40c) parallel oder im Wesentlichen parallel zu der Achse der Wickelvorrichtung (300) anordenbar ist.

10. Reversiervorrichtung (10) nach einem der vorangegangenen Ansprüche, **dadurch gekennzeichnet, dass** wenigstens eine Kühlwalze (50), vorzugsweise mit Bezug auf den Verlauf der Folienbahn (100) zwischen der Abzugsvorrichtung (20) und der mindestens einen Umlenkwalze (40), angeordnet ist.

11. Flachlegevorrichtung (420) für das Flachlegen einer Folienblase (200) zu einer Folienbahn (100) mit einer Reversiervorrichtung (10) für das Reversieren der Folienbahn (100), **dadurch gekennzeichnet, dass** die Reversiervorrichtung (10) ausgebildet ist mit den Merkmalen eines der Ansprüche 1 bis 10.

12. Folienblasmaschine (400) mit mindestens einem Folienextruder (410) für das Herstellen einer Folienblase (200), einer Flachlegevorrichtung (420) für das Flachlegen der Folienblase (200) zu einer Folienbahn (100), einer Reversiervorrichtung (10) für das Reversieren der Folienbahn (100) und einer Wickelvorrichtung (300) zum Aufwickeln der Folienbahn (10), **dadurch gekennzeichnet, dass** die Reversiervorrichtung (10) ausgebildet ist mit den Merkmalen eines der Ansprüche 1 bis 10.

## Claims

1. Reversing device (10) for a film web (100), having a take-off device (20), at least one turning device (30) and at least one deflecting roller (40), where the film web (100) can be guided by the take-off device (20) over the at least one turning device (30) and the at least one deflecting roller (40) to a winding device (300), and the axes (AA, WA, UA) of the take-off device (20), the at least one turning device (30) and the at least one deflecting roller (40) are variable in angle relative to one another, **characterized in that** the at least one deflecting roller (40) is formed as an expanding roller having an expanding capacity which increases towards the end faces (42, 44) of the deflecting roller (40),
wherein the deflecting roller (40) has on the circumferential surface (46), at least in some sections, expanding elements (48) which have an angle of attack that increases in the direction of the end faces (42, 44) of the deflecting roller (40).

2. Reversing device (10) according to Claim 1, **characterized in that** the angle of attack increases from 0° to about 45° from the centre of the deflecting roller (40) towards the end faces (42, 44) of the deflecting roller (40).

3. Reversing device (10) according to either of Claims 1 and 2, **characterized in that** the expanding elements (48) are formed as bristles, at least in some sections.

4. Reversing device (10) according to one of the preceding claims, **characterized in that** the expanding capacity of the deflecting roller (40) increases linearly or substantially linearly towards the end faces (42, 44).

5. Reversing device (10) according to one of the preceding claims, **characterized in that** the expanding capacity of the deflecting roller (40) increases symmetrically towards both end faces (42, 44) of the deflecting roller (40) or substantially symmetrically towards the centre of the deflecting roller (40).

6. Reversing device (10) according to one of the preceding claims, **characterized in that** the at least one turning device (30) is formed cylindrically, in particular as an air-turn bar.

7. Reversing device (10) according to one of the preceding claims, **characterized in that**, starting from the take-off device (20) along the course of the film web (100), there are arranged a first deflecting roller (40a), a first turning device (30a), a second deflecting roller (40b), a second turning device (30b) and a third deflecting roller (40c), wherein at least one deflecting roller (40), in particular at least the second deflecting roller (40b), is formed as an expanding roller with an expanding capacity increasing towards the end faces (42, 44) of the deflecting roller (40).

8. Reversing device (10) according to Claim 7, **characterized in that** the first deflecting roller
(40a) and the take-off device (20) have axes (UA, AA) aligned parallel or substantially parallel to one another.

9. Reversing device (10) according to either of Claims 7 and 8, **characterized in that** the axis (UA) of the third deflecting roller (40c) can be arranged parallel or substantially parallel to the axis of the winding device (300).

10. Reversing device (10) according to one of the preceding claims, **characterized in that** at least one cooling roller (50) is preferably arranged between the take-off device (20) and the at least one deflecting roller (40) relative to the course of the film web (100).

11. Lay-flat device (420) for laying a film bubble (200) flat to form a film web (100), having a reversing device (10) for reversing the film web (100), **characterized in that** the reversing device (10) is formed with the features of one of Claims 1 to 10.

12. Film blow-moulding machine (400) having at least one film extruder (410) for the production of a film bubble (200), a lay-flat device (420) for laying the film bubble (200) flat to form a film web (100), a reversing device (10) for reversing the film web (100), and a winding device (300) for winding up the film web (10), **characterized in that** the reversing device (10) is formed with the features of one of Claims 1 to 10.

## Revendications

1. Ensemble (10) de renversement d'une nappe de film (100), l'ensemble présentant un ensemble d'extraction (20), au moins un ensemble de retournement (30) et au moins un cylindre de renvoi (40),
la nappe de film (100) pouvant être guidée par l'ensemble d'extraction (20) sur le ou les ensembles de retournement (30) et le ou les cylindres de renvoi (40) en direction d'un ensemble de bobinage (300),
l'angle formé entre les axes (AA, WA, UA) de l'ensemble d'extraction (20), du ou des ensembles de retournement (30) et du ou des cylindres de renvoi (40) pouvant être modifié,
**caractérisé en ce que**
le ou les cylindres de renvoi (40) sont configurés comme cylindres d'étirage en largeur présentant une capacité d'étirage en largeur qui augmente en direction des côtés frontaux (42, 44) des cylindres de renvoi (40) et
**en ce qu'**au moins sur certaines parties de sa surface périphérique (46), le cylindre de renvoi (40) présente des éléments (48) d'étirage en largeur dont l'angle de pose augmente en direction des côtés frontaux (42, 44) du cylindre de renvoi (40).

2. Ensemble (10) de renversement selon la revendication 1, **caractérisé en ce que** l'angle de pose augmente du milieu du cylindre de renvoi (40) en direction des côtés frontaux (42, 44) du cylindre de
renvoi (40) de 0° à environ 45°.

3. Ensemble (10) de renversement selon l'une des revendications 1 ou 2, **caractérisé en ce qu'**au moins certaines parties des éléments (48) d'étirage en largeur sont configurées en forme de brosse.

4. Ensemble (10) de renversement selon l'une des revendications précédentes, **caractérisé en ce que** la capacité d'étirage en largeur du cylindre de renvoi (40) augmente linéairement ou essentiellement linéairement en direction des côtés frontaux (42, 44).

5. Ensemble (10) de renversement selon l'une des revendications précédentes, **caractérisé en ce que** la capacité d'étirage en largeur du cylindre de renvoi (40) en direction des deux côtés frontaux (42, 44) du cylindre de renvoi (40) augmente symétriquement ou essentiellement symétriquement en direction du milieu du cylindre de renvoi (40).

6. Ensemble (10) de renversement selon l'une des revendications précédentes, **caractérisé en ce que** le ou les ensembles de retournement (30) sont cylindriques et configurés en particulier en forme de barres de retournement à l'air.

7. Ensemble (10) de renversement selon l'une des revendications précédentes, **caractérisé en ce que** partant de l'ensemble d'extraction (20) le long de la nappe de film (100), un premier cylindre de renvoi (40a), un premier ensemble de retournement (30a), un deuxième cylindre de renvoi (40b), un deuxième ensemble de retournement (30b) et un troisième cylindre de renvoi (40c) sont disposés, au moins un cylindre de renvoi (40) et en particulier au moins le deuxième cylindre de renvoi (40b) étant configurés comme cylindre d'étirage en largeur dont la capacité d'étirage en largeur augmente en direction des côtés frontaux (42, 44) du cylindre de renvoi (40).

8. Ensemble (10) de renversement selon la revendication 7, **caractérisé en ce que** le premier cylindre de renvoi (40a) et l'ensemble d'extraction (20) présentent des axes (UA, AA) orientés parallèlement l'un à l'autre ou essentiellement parallèlement l'un à l'autre.

9. Ensemble (10) de renversement selon l'une des revendications 7 ou 8, **caractérisé en ce que** l'axe (UA) du troisième cylindre de renvoi (40c) peut être disposé en parallèle ou essentiellement en parallèle à l'axe de l'ensemble de bobinage (300).

10. Ensemble (10) de renversement selon l'une des revendications précédentes, **caractérisé en ce qu'**au moins un cylindre de refroidissement (50) est disposé de préférence entre l'ensemble d'extraction (20) et le ou les cylindres de renvoi (40) dans le sens d'avancement de la nappe de film (100).

11. Ensemble (420) de pose à plat permettant la pose à plat d'un film soufflé (200) en une nappe de film (100), et présentant un ensemble de renversement (10) permettant l'inversion de la nappe de film (100), **caractérisé en ce que** l'ensemble de renversement (10) est configuré avec les caractéristiques de l'une des revendications 1 à 10.

12. Machine (400) de soufflage de film présentant au moins une extrudeuse de film (410) permettant de réaliser un film soufflé (200), un ensemble (420) de pose à plat permettant de poser à plat le film soufflé (200) pour former une nappe de film (100), un ensemble de renversement (10) permettant d'inverser la nappe de film (100) et un ensemble de bobinage (300) permettant de bobiner la nappe de film (10), **caractérisée en ce que** l'ensemble de renversement (10) est configuré avec les caractéristiques de l'une des revendications 1 à 10.
